# EUROPEAN PATENT APPLICATION

(11) **EP 4 656 561 A1**
(43) Date of publication of application: **03.12.2025**
(21) Application number: 24179084.9
(22) Date of filing: 30.05.2024
(51) Int. Cl.: B65G 23/08, B65G 23/22

(54) **GEARLESS CONVEYOR DRIVES**

(71) Applicant: GE Energy Power Conversion Technology Ltd, Rugby, Warwickshire CV21 1BD (GB)
(72) Inventor: Loganathan, Arun, 600032 Chennai (IN); Anbarasu, Ramasamy, Rugby, CV21 1BU (GB); Hague, Michael, Rugby, CV21 1BU (GB); Mirahki, Hooshang, Rugby, CV21 1BU (GB); Durantay, Lionel, 54250 Champigneulles (FR); Galmiche, Christophe, 54250 Champigneulles (FR)
(74) Representative: Serjeants LLP

(57) **Abstract**

A gearless conveyor drive (1A) for driving a conveyor belt of a conveyor system is described. The gearless conveyor drive (1A) includes a substantially tubular barrel (2) having a radially outer surface (2a) adapted to contact the conveyor belt, and a stationary shaft (4). The shaft (4) is supported by a pair of support structures (6, 8), each support structure (6, 8) supporting a respective axial end of the shaft (4). A first drive unit (18) includes a first rotor assembly and a first stator assembly. The first rotor assembly includes at least one first rotor fixedly connected to the barrel (2) for rotating the barrel (2) relative to the shaft (4). The first stator assembly includes at least one first stator fixedly connected to the shaft (4).

## Description

### Technical Field

The present invention relates to gearless conveyor drives, and in particular to drives that are configured as an electric motor adapted to drive a conveyor belt of a conveyor system.

The conveyor system may be an overland or underground conveyor system and may be used in a mining environment to transport ore from a mine to a processing plant, for example.

### Background Art

In a known gearless conveyor drive a large-diameter, low-speed synchronous electric motor has a rotating shaft that is connected directly to a separate drive pulley that drives a conveyor belt of a conveyor system. The conveyor belt is looped around the radially outer surface of the drive pulley. The rotating shaft of the gearless conveyor drive may be connected to the drive pulley by a flange connection.

### Summary of the invention

The present invention provides a gearless conveyor drive for driving a conveyor belt of a conveyor system, the gearless conveyor drive comprising:
a substantially tubular barrel having a radially outer surface adapted to contact the conveyor belt;
a stationary shaft;
a pair of support structures, each support structure supporting a respective axial end of the shaft; and
a first drive unit comprising a first rotor assembly and a first stator assembly;
wherein the first rotor assembly comprises at least one first rotor fixedly connected to the barrel for rotating the barrel relative to the shaft, and wherein the first stator assembly comprises at least one first stator fixedly connected to the shaft.

The rotating barrel may comprise a rigid structural tube that may be made of a suitable metal or metal alloy (e.g., steel, stainless steel or aluminium) and functions as the main structural part of the barrel. The radially inner surface of the tube may be substantially cylindrical and may define the radially inner surface of the barrel. The radially outer surface of the tube may be substantially cylindrical. The radially outer surface of the barrel - i.e., the surface that contacts the conveyor belt - may be defined by the radially outer surface of the tube or by an outer layer that is adhered to the radially outer surface of the tube. The outer layer may be made of a suitable material (e.g., rubber) and may be adhered to the radially outer surface of the tube by a suitable adhesive. The outer layer may protect the underlying tube from wear and tear. The outer surface of the outer layer may be formed with a textured surface such as a diamond or square texture, for example, which may help to increase friction between the conveyor belt and the barrel and reduce slippage. If there is no need for a protective outer layer, this results in reduced material costs and assembly time.

The barrel (and the rigid structural tube) may have a first axial end and a second axial end.

The shaft may extend through the barrel. The shaft may have a first axial end that is supported by one of the support structures and a second axial end that is supported by the other one of the support structures. The shaft may comprise one or more openings through which electrical cabling and cooling pipes may be fitted, for example.

In one arrangement, the interior of the barrel may be substantially empty apart from the part of the shaft that extends through the barrel.

In another arrangement, the first drive unit may be positioned inside the barrel. In particular, the at least one first rotor may be fixedly connected to the inner surface of the barrel (e.g., the radially inner surface of the tube so that it rotates the tube) and the at least one first stator may be fixedly connected to the part of the shaft that extends through the barrel. Such an arrangement may be used to minimise the length of the gearless conveyor drive in the axial direction - i.e., it provides a compact design where the space inside the barrel is fully utilised. In this arrangement, each first rotor is connected directly to the barrel, but it will be understood that each first rotor may be connected indirectly to the barrel, e.g., by a rigid structural part of the first drive unit.

In another arrangement, the first drive unit may be positioned at the first axial end of the barrel. The first drive unit may comprise a first housing that surrounds the first rotor assembly and the first stator assembly. The first housing may be fixedly connected to the barrel - i.e., so that the first housing rotates with the barrel relative to the shaft. The at least one first rotor may be fixedly connected to the barrel by the first housing - e.g., each first rotor may be fixedly connected to an inner surface of the first housing and the first housing may be fixedly connected to the barrel. The first housing may be adapted to rotatably mount the barrel and the first rotor assembly to the stationary shaft. For example, the first housing may include at least one radially extending wall that is adapted to rotatably mount the barrel and the first rotor assembly to the shaft by a bearing. The first housing may include a pair of radially extending walls that are spaced apart in the axial direction and the first rotor assembly and the first stator assembly may be positioned between the walls. One of the walls may be formed as an end plate - i.e., may be positioned at a first axial end of the gearless conveyor drive adjacent to one of the support structures. Another wall may be formed at the interface between the first drive unit and the barrel. This wall may be formed in two or more parts, e.g., a radially inner part and a radially outer part, and at least part of this wall may be integrally formed with the barrel (e.g., with the rigid structural tube). The first axial end of the barrel (e.g., the first axial end of the rigid support tube) may be fixedly connected to the adjacent wall of the first housing or integrally formed therewith. A first bearing may be positioned between the radially inner part of one of the walls and the outer surface of the shaft. A second bearing may be positioned between the radially inner part of the other wall and the shaft. If only a single bearing is used, the radially inner part of the other wall may be in sliding contact with the shaft, optionally by using a sealing member. If one of the walls is formed as an end plate, the sealing member may be provided on the end plate and the bearing may be positioned generally at the interface between the first drive unit and the first axial end of the barrel.

The first housing may include a substantially cylindrical wall that extends from the at least one radially extending wall. If the first housing includes a pair of radially extending walls, the substantially cylindrical wall may extend between them to fully enclose the first rotor assembly and the first stator assembly. One or more access openings may be provided in the substantially cylindrical wall to provide access to the interior of the first housing - e.g., for maintenance and repair of the first rotor assembly and/or the first stator assembly. Access openings may be circumferentially spaced around the substantially cylindrical wall. In an alternative arrangement, one or more access openings may be provided in an end plate - i.e., a radially extending wall of the first housing that is at the first axial end of the gearless conveyor drive. Each access opening may be covered by a removable cover.

The outer diameter of the substantially cylindrical wall of the first housing may be substantially the same as the outer diameter of the barrel. Such an arrangement may be convenient for gearless conveyor drives with a lower power rating. It means that there is less space in the interior of the first housing for accommodating the first rotor assembly and the first stator assembly. But the overall design is more compact.

The gearless conveyor drive may comprise at least one radially extending guide adapted to guide an edge of the conveyor belt. A guide may be provided on the outer surface of the barrel or the first housing, optionally at the interface between the first drive unit and the barrel, for example. If a second drive unit is provided at the second axial end of the barrel - see below - another radially extending guide may be provided on the outer surface of the barrel or a second housing of the second drive unit. The other radially extending guide may be provided at the interface between the second drive unit and the barrel and may be adapted to guide the opposite edge of the conveyor belt. In other words, the conveyor belt may be guided between a pair of guides that are spaced apart in the axial direction. The spacing may be determined by the width of the conveyor belt.

Alternatively, the outer diameter of the substantially cylindrical wall of the first housing may be greater than the outer diameter of the barrel. Such an arrangement may be convenient for gearless conveyor drives with a higher power rating. It means that there is more space in the interior of the first housing for accommodating the first rotor assembly and the first stator assembly. The first rotor assembly and the first stator assembly may therefore be larger and have a higher power rating. If a second drive unit is provided at a second axial end of the barrel - see below - the edges of the conveyor belt may be guided by radially extending walls of the first and second drive units.

The first drive unit may be removably connected to the barrel. In other words, although the first drive unit is fixedly connected to the barrel during operation of the gearless conveyor drive, it may also be removably connected, e.g., using one or more mechanical fixings such as bolts or screws. Releasing the mechanical fixings (e.g., untightening and removing the bolts or screws) allows the first drive unit to be removed from the barrel and the shaft. The at least one first rotor may be removably connected to the barrel (e.g., to the rigid structural tube). For example, if the at least one first rotor is fixedly connected to the barrel by the first housing of the first drive unit, the first housing may be removably connected to the barrel, e.g., using one or more mechanical fixings such as bolts or screws. The at least one first rotor may remain fixedly connected to the first housing and may be removed with it. The at least one first stator may also be removably connected to the shaft, e.g., using one or more mechanical fixings such as bolts or screws. The first drive unit may therefore be provided as a self-contained unit or "module" that may be fitted to the first axial end of the barrel and the first axial end of the supported shaft. The barrel and the shaft may be designed to allow different modules to be fitted to them depending on the required power rating of the gearless conveyor drive. In other words, the barrel and the shaft may be designed as "standard" components to which one or more modules may be fitted as one or more drive units. The fitted module(s) may be selected from a plurality of different modules. The modules may have different outer diameters and different rotor and stator assemblies, for example.

A second drive unit may be positioned at the second axial end of the barrel. Such an arrangement may be convenient for gearless conveyor drives with a higher power rating because a drive unit will be provided at both axial ends of the barrel. The second drive unit may be similar to the first drive unit described above and may comprise a second rotor assembly and a second stator assembly. The second rotor assembly may comprise at least one second rotor fixedly connected to the barrel for rotating the barrel relative to the shaft. The second stator assembly may comprise at least one second stator fixedly connected to the shaft. The second drive unit may comprise a second housing that surrounds the second rotor assembly and the second stator assembly.

The second housing may be fixedly connected to the barrel - i.e., so that the second housing rotates relative to the shaft. The at least one second rotor may be fixedly connected to the barrel by the second housing - e.g., each second rotor may be fixedly connected to an inner surface of the second housing and the second housing may be fixedly connected to the barrel. The second housing may be adapted to rotatably mount the barrel and the second rotor assembly to the shaft. For example, the second housing may include at least one radially extending wall that is adapted to rotatably mount the barrel and the second rotor assembly to the shaft by a bearing. The second housing may include a pair of radially extending walls that are spaced apart in the axial direction and the second rotor assembly and the second stator assembly may be positioned between the walls. One of the walls may be formed as an end plate - i.e., may be positioned at a second axial end of the gearless conveyor drive adjacent to another one of the support structures. The gearless conveyor drive may therefore comprise a pair of end plates, each end plate being positioned at a respective axial end of the gearless conveyor drive. Another wall may be formed at the interface between the second drive unit and the barrel. This wall may be formed in two or more parts, e.g., a radially inner part and a radially outer part, and at least part of this wall may be integrally formed with the barrel (e.g., with the rigid structural tube). The second axial end of the barrel (e.g., the second axial end of the rigid support tube) may be fixedly connected to the adjacent wall of the second housing or integrally formed therewith. A first bearing may be positioned between the radially inner part of one of the walls and the outer surface of the shaft. A second bearing may be positioned between the radially inner part of the other wall and the shaft. If only a single bearing is used, the radially inner part of the other wall may be in sliding contact with the shaft, optionally by using a sealing member. If one of the walls is formed as an end plate, the sealing member may be provided on the end plate and the bearing may be positioned generally at the interface between the second drive unit and the second axial end of the barrel. The barrel may be supported for rotation by two bearings - a first bearing at the first drive unit and a second bearing at the second drive unit. Alternatively, the barrel may be supported for rotation by four bearings - a pair of first bearings at the first drive unit and a pair of second bearings at the second drive unit. The bearings will support all rotating parts of the gearless conveyor drive including any rotating housings and the first and second rotor assemblies, for example.

The second housing may include a substantially cylindrical wall that extends from the at least one radially extending wall. If the second housing includes a pair of radially extending walls, the substantially cylindrical wall may extend between them to fully enclose the second rotor assembly and the second stator assembly. One or more access openings may be provided in the substantially cylindrical wall to provide access to the interior of the second housing - e.g., for maintenance and repair of the second rotor assembly and/or the second stator assembly. Access openings may be circumferentially spaced around the substantially cylindrical wall. In an alternative arrangement, one or more access openings may be provided in an end plate - i.e., a radially extending wall of the second housing that is at the second axial end of the gearless conveyor drive. Each access opening may be covered by a removable cover.

The outer diameter of the substantially cylindrical wall of the second housing may be substantially the same as the outer diameter of the barrel. Such an arrangement may be convenient for gearless conveyor drives with a lower power rating. It means that there is less space in the interior of the second housing for accommodating the second rotor assembly and the second stator assembly. But the overall design is more compact. Alternatively, the outer diameter of the substantially cylindrical wall of the second housing may be greater than the outer diameter of the barrel. Such an arrangement may be convenient for gearless conveyor drives with a higher power rating. It means that there is more space in the interior of the second housing for accommodating the second rotor assembly and the second stator assembly. The second rotor assembly and the second stator assembly may therefore be larger and have a higher power rating.

The second drive unit may be removably connected to the barrel. In other words, although the second drive unit is fixedly connected to the barrel during operation of the gearless conveyor drive, it may also be removably connected, e.g., using one or more mechanical fixings such as bolts or screws. Releasing the mechanical fixings (e.g., untightening and removing the bolts or screws) allows the second drive unit to be removed from the barrel and the shaft. The at least one second rotor may be removably connected to the barrel (e.g., to the structural tube). For example, if the at least one second rotor is fixedly connected to the barrel by the second housing, the second housing may be removably connected to the barrel, e.g., using one or more mechanical fixings such as bolts or screws. The at least one second rotor may remain fixedly connected to the second housing and may be removed with it. The at least one second stator may also be removably connected to the shaft, e.g., using one or more mechanical fixings such as bolts or screws. The second drive unit may therefore also be provided as a self-contained unit or module that may be fitted to the second axial and of the barrel and the second axial end of the supported shaft.

A third drive unit may be fixedly connected to the first drive unit. The third drive unit may comprise a third rotor assembly and a third stator assembly. The third rotor assembly may comprise at least one third rotor fixedly connected to the barrel for rotating the barrel relative to the shaft. The third stator assembly may comprise at least one third stator.

The third drive unit may comprise a third housing that surrounds the third rotor assembly and the third stator assembly. The third housing may be fixedly connected to the first housing of the first drive unit and may rotate relative to the shaft. The at least one third rotor may be fixedly connected to the barrel by the third and first housings - i.e., each third rotor may be fixedly connected to an inner surface of the third housing and the third housing may be fixedly connected to the first housing, which is fixedly connected in turn to the barrel. The third housing may include a radially extending wall that may be formed as an end plate - i.e., at the first axial end of the gearless conveyor drive adjacent to one of the support structures. The third housing may include a substantially cylindrical wall that is fixedly connected to the first housing, e.g., to a corresponding substantially cylindrical wall of the first housing. The outer diameter of the substantially cylindrical wall of the third housing may be substantially the same as the outer diameter of the substantially cylindrical wall of the first housing.

The third drive unit may be removably connected to the first drive unit. In other words, although the third drive unit is fixedly connected to the first drive unit during operation of the gearless conveyor drive, it may also be removably connected, e.g., using one or more mechanical fixings such as bolts or screws. Releasing the mechanical fixings (e.g., untightening and removing the bolts or screws) allows the third drive unit to be removed from the barrel and the shaft.

The at least one third stator may be removably connected to the shaft, e.g., using one or more mechanical fixings such as bolts or screws, or may be fixedly connected to a sub-shaft. The sub-shaft is fixedly connected to the shaft, e.g., using one or more mechanical fixings such as bolts or screws. It will be understood that in the arrangement described above, the shaft must be long enough to mount both the first and third drive units, which may not be desirable if only the first drive unit is actually fitted. In the latter case, the third drive unit may be supplied with the sub-shaft that is fixedly connected to the existing shaft. The sub-shaft may include a flange part at one axial end that is fixedly connected to a flange part of the existing shaft, for example. The other axial end of the sub-shaft is supported by the support structure.

The third drive unit may also be provided as a self-contained unit or module that may be fitted to the barrel and the shaft. To fit a third drive unit, an end plate of the first drive unit may be removed from the rest of the first housing and may optionally be fixedly connected to the substantially cylindrical wall of the third drive unit. Removing the end plate may facilitate a fixed connection between the housings of the first and third drive units. It will be readily understood that a fourth drive unit may be fixedly connected to the optional second drive unit in a similar way. The fourth drive unit may comprise a fourth rotor assembly and a fourth stator assembly etc. Fitting two or more drive units to each axial end of the barrel allows the power rating of the gearless conveyor drive to be increased.

The gearless conveyor drive may comprise a brake disc. The brake disc may be formed as part of the barrel or as part of the first drive unit, for example as part of the first housing.

The brake disc may function as a guide for guiding an edge of the conveyor belt.

The brake disc may increase the strength and stiffness of the barrel, particularly under braking conditions.

The brake disc may be used for emergency braking of the gearless conveyor drive and/or to keep the barrel and other rotating parts stationary during maintenance or repair, for example.

The brake disc may form part of an external braking assembly having any suitable construction. The braking assembly may also comprise one or more brake pads that may be brought into friction contact with the annular surface(s) of the brake disc when braking of the rotor assembly is required. The one or more brake pads may be mounted on a brake calliper, for example.

A suitable friction coating may be applied to one or both of the annular surfaces of the brake disc.

The brake disc preferably extends radially outwardly from the barrel or the first housing.

The brake disc may be formed as an integral part of the barrel, for example as part of the rigid structural tube. The brake disc may also be formed as an integral part of the first housing, for example as part of the substantially cylindrical wall. The brake disc may be one of forged, welded and shrink-fitted to the barrel or the first housing. Such a brake disc will not normally be easily replaced and so it may have an increased thickness to allow for surface regrinds of its annular surface(s) to prolong its use.

The brake disc may also be formed as a separate component that is fixedly connected to the barrel or the first housing by one or more mechanical fixings such as bolts that allow the brake disc to be removed. Removing the one or more mechanical fixings using a suitable tool allows the brake disc to be removed and replaced if necessary. Removing the brake disc may make it easier to apply a new friction coating or easier to carry out a regrinding process, for example. The barrel or first housing may comprise an integral radially extending flange and the brake disc may be removably mounted to the barrel or first housing by the one or more mechanical fixings. The brake disc may be segmented with each brake disc segment being fixedly connected to the barrel or the first housing and/or the adj acent brake disc segments by one or more mechanical fixings such as bolts or screws that allow each segment to be removed if required. It will be understood that a segmented brake disc will normally require a connection in the circumferential direction because this is the direction of braking torque. The segmented construction may facilitate removal of the brake disc. For example, it may allow the brake disc to be removed without the need to first remove the conveyor belt from the barrel. In some cases, it may also be necessary to remove only one or two of the individual brake disc segments in order to carry out the necessary repairs or replacement.

The brake disc may be constructed as a "floating" brake disc. For example, the brake disc may be formed as a separate component that fixedly connected to the barrel or the first housing by one or more mechanical fixings that allow for some limited relative movement between the brake disc and the barrel or the first housing. (This may be directly contrasted with conventional mechanical fixings such as bolts or screws where there is no relative movement at all between the brake disc and the barrel or the first housing.) The mechanical fixings for connecting the "floating" brake disc may be bobbins or rivets or rectangular keys, for example. The mechanical fixings may be received through aligned openings in the brake disc and a radially extending flange of the barrel or the first housing. The mechanical fixings for connecting the "floating" brake disc to the barrel or the first housing may be formed in two or more pieces because this normally allows for easier assembly and removal of the mechanical fixings and the brake disc. If the mechanical fixings are formed in two or more pieces (e.g., as a multi-piece bobbin or the like) the separate pieces may be fixedly connected together using one or more threaded fasteners or rivets, or by means of a push fit, screw fit or interference connection, for example. The mechanical fixings may comprise radial springs to provide dynamic concentricity control if required. More particularly, the radial springs may be used to adjust the relative movement that is permitted by the mechanical fixings. Using a "floating" brake disc may reduce heat dissipation into the barrel and may prevent warping of the brake disc as a result of heat generated during braking. It would also allow the brake disc to be removed. The "floating" brake disc may be formed in a plurality of segments, each segment being separately connected to the barrel with one or more mechanical fixings. This may also allow for some limited relative movement between the individual segments of the "floating" brake disc. Cut-out portions or voids may be provided to reduce the contact area between the "floating" brake disc and the barrel or first housing. Such cut-out portions may be circumferentially spaced around the barrel and may be positioned between the mechanical fixings, for example.

The brake disc may comprise one or more locking holes adapted to receive a locking pin of an external locking mechanism. The locking pin may be moved in the axial direction between a locking position where it is engaged in an aligned locking hole and a non-locking position where it is not engaged and the rotor assembly is free to rotate. When the locking pin is engaged in a locking hole, the barrel and the other rotating parts (e.g., the housing and rotor assembly of each drive unit) are prevented from rotating by the locking mechanism. This may be necessary when the gearless conveyor drive is undergoing maintenance or repair, for example. The brake disc may comprise a plurality of locking holes that may be circumferentially spaced around the brake disc. This may allow the barrel and the other rotating parts to be locked in a particular angular position, e.g., so that an access opening of the first housing is in a particular position relative to the support structures.

The brake disc may be a vented brake disc and may comprise one or more vent holes or vent openings. The brake disc may comprise a plurality of vent holes or vent openings that may be circumferentially spaced around the brake disc. Vent holes or vent openings may be arranged in any suitable pattern and may be interspersed with the optional locking holes.

The brake disc may be positioned inside the barrel, e.g., fixedly connected to an inner surface of the barrel or the rigid structural tube. The brake disc may form part of a braking assembly having any suitable construction that is also positioned inside the barrel. The braking assembly may also comprise one or more brake pads that may be brought into friction contact with one or more surface of the brake disc when braking of the rotor assembly is required. The one or more brake pads may be mounted on a brake calliper, for example.

Each drive unit may be configured as an axial flux electric motor, i.e., where magnetic flux flows through the respective rotor assembly in the axial direction, which is along a direction that is parallel to the axis of rotation of the barrel. The rotor assembly of each drive unit may comprise any suitable number of rotors that are directly or indirectly connected to the barrel. The stator assembly of each drive unit may comprise any suitable number of stators that are connected to the shaft, optionally by means of a rigid stator frame or other structure. Each drive unit may comprise only one rotor and only one stator spaced apart by an axial air gap. Each drive unit may comprise a pair of rotors and only one stator - e.g., where the stator is positioned between the pair of rotors and is spaced apart from each rotor by respective axial air gaps. Each drive unit may comprise only one rotor and a pair of stators - e.g., where the rotor is positioned between the pair of stators and is spaced apart from each stator by respective axial air gaps. Each drive unit may comprise a pair of rotors and a pair of stators - e.g., where the pair of stators are positioned between the pair of rotors or *vice versa.* A first rotor may be spaced apart from a first stator by a first axial air gap and a second rotor may be spaced apart from a second stator by a second axial air gap. Each stator will be fixedly connected to the shaft and each rotor will be fixedly connected to the barrel, optionally by being fixedly connected to a housing of the respective drive unit that is fixedly connected to the barrel, for example.

Each drive unit may be configured as a radial flux electric motor - i.e., where magnetic flux flow through the respective rotor assembly in the radial direction. In a basic arrangement with only one rotor and only one stator, the rotor is preferably arranged radially outside the stator.

Each rotor may have any suitable construction. Depending on the rotor construction, each drive unit may function as a synchronous or asynchronous/induction electric motor. For example, each rotor may be a wound rotor with a rotor winding, a squirrel cage rotor, a permanent magnet rotor with a plurality of permanent magnets spaced circumferentially around the rotor - e.g., on an annular or radial surface of the rotor or within the rotor, or a salient pole/reluctance rotor with a plurality of salient poles spaced circumferentially around the rotor.

Each stator may be fixedly connected to the shaft by a rigid stator frame. A single stator frame may be used fixedly connect two or more stators of the same drive unit.

Each stator may have any suitable construction. For example, each stator may comprise a stator winding (e.g., a multi-phase stator winding) with a plurality of stator coils.

Each stator winding may be electrically connected to a converter assembly. Each converter assembly may be positioned in a drive unit housing (i.e., with the respective stator assembly) or in the interior of the barrel, for example. In the former arrangement, each converter assembly may be mounted to a rigid stator frame or other stationary structure. In the latter arrangement, the stator assembly may still be positioned in the drive unit housing and may be electrically connected to the converter assembly by electrical cabling that extends between the interior of the drive unit housing and the interior of the barrel. The converter assembly may be mounted to the part of the shaft that extends through the interior of the barrel.

### Drawings

Figure 1 is a perspective view of a first gearless conveyor drive according to the present invention;
Figure 2 is an end view of the first gearless conveyor drive of Figure 1;
Figure 3 is a cross-section view of part of the first gearless conveyor drive of Figure 1;
Figure 4A is a cross-section view of part of an alternative drive unit for the first gearless conveyor drive of Figure 1;
Figure 4B is a perspective view of the alternative drive unit of Figure 4A;
Figure 5A is a cross-section view of part of another alternative drive unit for the first gearless conveyor drive of Figure 1;
Figure 5B is a perspective view of the alternative drive unit of Figure 5A;
Figure 6 is a perspective view of a second gearless conveyor drive according to the present invention;
Figure 7 is an end view of the second gearless conveyor drive of Figure 6;
Figure 8 is a cross-section view of part of the second gearless conveyor drive of Figure 6;
Figure 9 is a perspective view of a third gearless conveyor drive according to the present invention;
Figure 10 is an end view of the third gearless conveyor drive of Figure 9;
Figure 11 is a perspective view of a fourth gearless conveyor drive according to the present invention;
Figure 12 is an end view of the third gearless conveyor drive of Figure 11;
Figure 13 is a cross-section view of the third gearless conveyor drive of Figure 11;
Figure 14 is a cross-section view of an alternative drive unit of the first gearless conveyor drive of Figure 1 that includes a converter assembly;
Figure 15 is a cross-section view of an alternative drive unit of the second gearless conveyor drive of Figure 6 that includes a converter assembly;
Figure 16 is a cross-section view of an alternative drive unit of the second gearless conveyor drive of Figure 6 that includes a converter assembly;
Figure 17 is a cross-section view of an alternative drive unit of the third gearless conveyor drive of Figure 9 that includes a converter assembly;
Figure 18 is a perspective view of a fifth gearless conveyor drive according to the present invention;
Figure 19 is a side view of the fifth gearless conveyor drive of Figure 18;
Figure 20 is an end view of the fifth gearless conveyor drive of Figure 18;
Figure 21 is a cross-section view of the fifth gearless conveyor drive of Figure 18 without the third and fourth drive units fitted;
Figure 22 is a cross-section view of part of the fifth gearless conveyor drive of Figure 18 showing how the third drive unit is fitted; and
Figure 23 is a cross-section view of a sixth gearless conveyor drive according to the present invention.

### Specific description

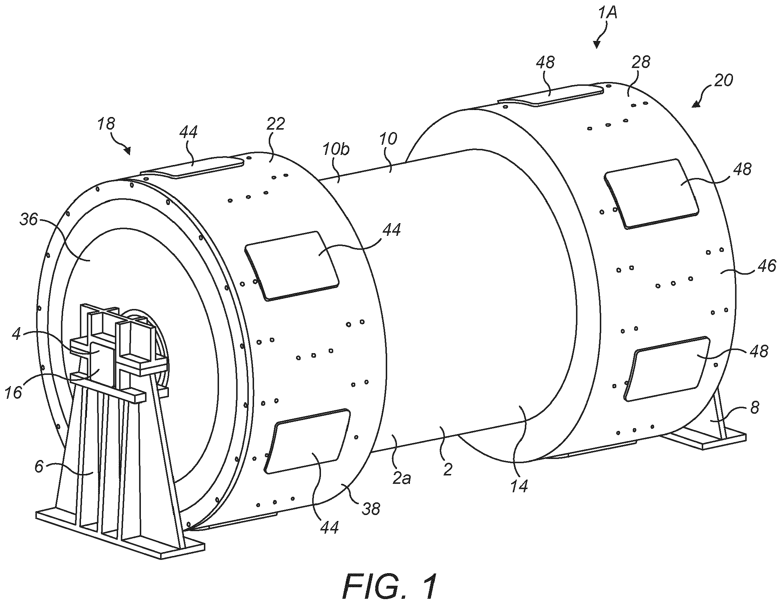

Referring to Figures 1 to 3, a first example of a gearless conveyor drive 1A is shown. The gearless conveyor drive 1A is for driving a conveyor belt CB of a conveyor system.

The gearless conveyor drive 1A includes a substantially tubular barrel 2 having a radially outer surface 2a adapted to contact the conveyor belt CB. The gearless conveyor drive 1A also includes a stationary shaft 4 and a pair of support structures 6, 8, each support structure supporting a respective axial end of the shaft.

The barrel 2 comprise a rigid structural tube 10 that may be made of a suitable metal or metal alloy (e.g., steel, stainless steel or aluminium) and functions as the main structural part of the barrel. The radially inner surface 10a of the tube 10 is substantially cylindrical and may define the radially inner surface of the barrel 2. The radially outer surface 10b of the tube 10 is substantially cylindrical. The radially outer surface of the barrel 2 - i.e., the surface that contacts the conveyor belt - may be defined by the radially outer surface 10b of the tube 10 or by an outer layer (not shown) that is adhered to the radially outer surface of the tube. The outer layer may be made of a suitable material (e.g., rubber) and may be adhered to the radially outer surface 10b of the tube 10 by a suitable adhesive. The outer layer may protect the underlying tube 10 from wear and tear. The outer surface of the outer layer may be formed with a textured surface such as a diamond or square texture, for example, which may help to increase friction between the conveyor belt and the barrel and reduce slippage. If there is no need for a protective outer layer, this results in reduced material costs and assembly time.

The barrel 2 has a first axial end 12 and a second axial end 14.

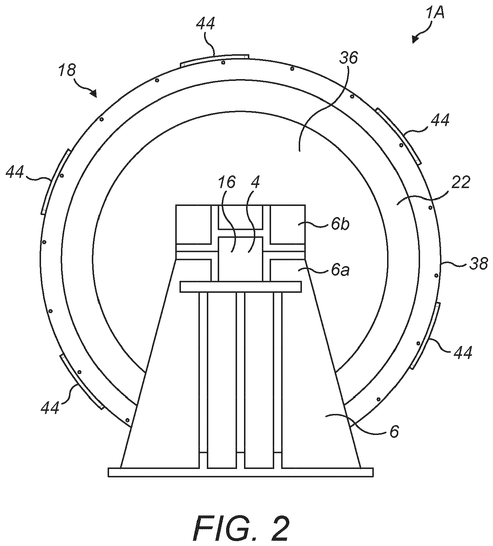

The shaft 4 extends through the barrel 2. The shaft 4 has a first axial end 16 that is supported by the support structure 6 and a second axial end that is supported by the support structure 8. The shaft 4 may include one or more openings (not shown) through which electrical cabling and cooling pipes may be fitted, for example. The axial ends of the shaft 4 have a non-circular (e.g., square) cross section and are received an opening in each support structure 6, 8 having a corresponding non-circular cross-section. This prevents rotation of the shaft 4 relative to the stationary support structures 6, 8. Each support structure 6, 8 may have a two-part construction with a lower part and an upper part that is removably connected to the lower part. The opening is defined by the lower and upper parts of each support structure 6, 8 as shown in Figure 2 (e.g., by a lower part 6a and an upper part 6b of the support structure 6). The upper part of each support structure may be removed from the corresponding lower part to allow the shaft 4 to be located.

A first drive unit 18 is positioned at the first axial end 12 of the barrel 2 and a second drive unit 20 is positioned at the second axial end 14 of the barrel 2.

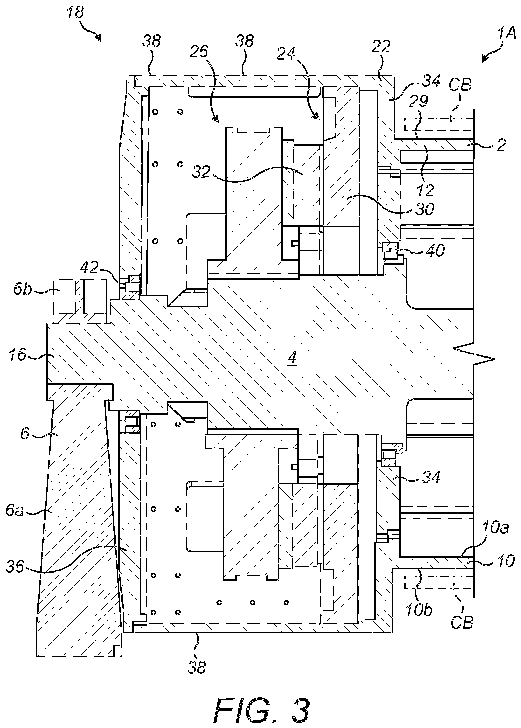

Referring to Figure 3, the first drive unit 18 includes a first housing 22 that surrounds a first rotor assembly 24 and a first stator assembly 26. In this example, the first and second drive units 18, 20 are configured as axial flux electric motors where magnetic flux flows through the respective rotor assembly in the axial direction - i.e., along a direction that is parallel to the axis of rotation of the barrel 2. Although only the first drive unit 18 is shown in Figure 3, it will be readily understood that the second drive unit 20 that is positioned at the second axial end 14 of the barrel 2 has the same construction with a second rotor assembly and a second stator assembly surrounded by a second housing 28. The first rotor assembly 24 is shown to have a single rotor 30 and the first stator assembly 26 is shown to have a single stator 32 spaced apart from the rotor 30 by an axial air gap. The rotor 30 is fixedly connected to the first housing 22 - i.e., to the wall 38 described below. The stator 32 is fixedly connected to the shaft 4, e.g., by means of a stator frame. The rotor 30 may include a plurality of permanent magnets and the stator 32 may include a plurality of stator coils, for example. But it will be understood that other arrangements are also possible.

The first and second housings 22, 28 are fixedly connected to the barrel 2 - i.e., so that the first and second housings 22, 28 rotate with the barrel relative to the shaft 4.

As shown in Figure 3, the first housing 22 includes a pair of radially extending walls 34, 36 that are spaced apart in the axial direction. The wall 34 is formed at the interface between the first drive unit 18 and the barrel 2. The wall 36 is formed as an end plate and is positioned at the first axial end of the gearless conveyor drive 1A adjacent the support structure 6. The wall 36 (or end plate) is removably connected to the barrel 2 by a plurality of mechanical fixing such as bolts or screws. A substantially cylindrical wall 38 extends between the radially extending walls 34, 36. A first bearing 40 is positioned between the radially inner part of the wall 34 and the outer surface of the shaft 4. A second bearing 42 is positioned between the radially inner part of the wall 36 (or end plate) and the shaft 4. If only a single bearing is used, the second bearing 42 is normally omitted and the radially inner part of the wall 36 may be in sliding contact with the shaft 4, optionally by using a sealing member.

Access openings are provided in the substantially cylindrical wall 38 to provide access to the interior of the first housing 22 - e.g., for maintenance and repair of the first rotor assembly 24 and/or the first stator assembly 26 - and are covered by removable covers 44. The access openings are circumferentially spaced around the wall 38. Access openings are also provided in the substantially cylindrical wall 46 of the second housing 28 - e.g., for maintenance and repair of the second rotor assembly and/or the second stator assembly - and are covered by removable covers 48. The access openings are circumferentially spaced around the wall 46.

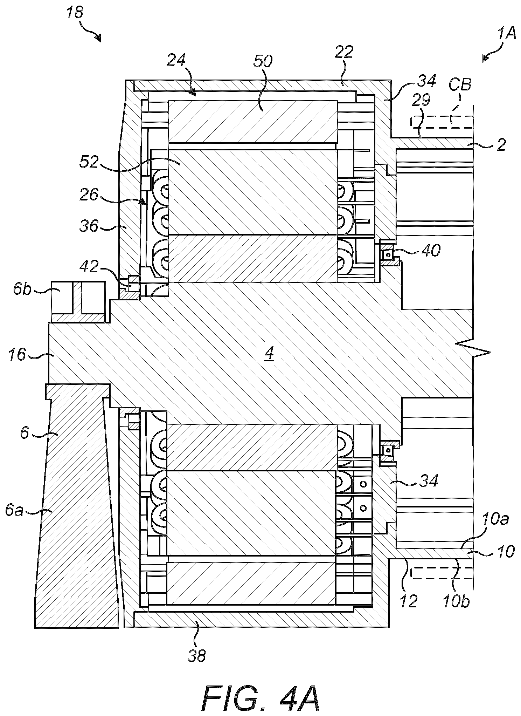

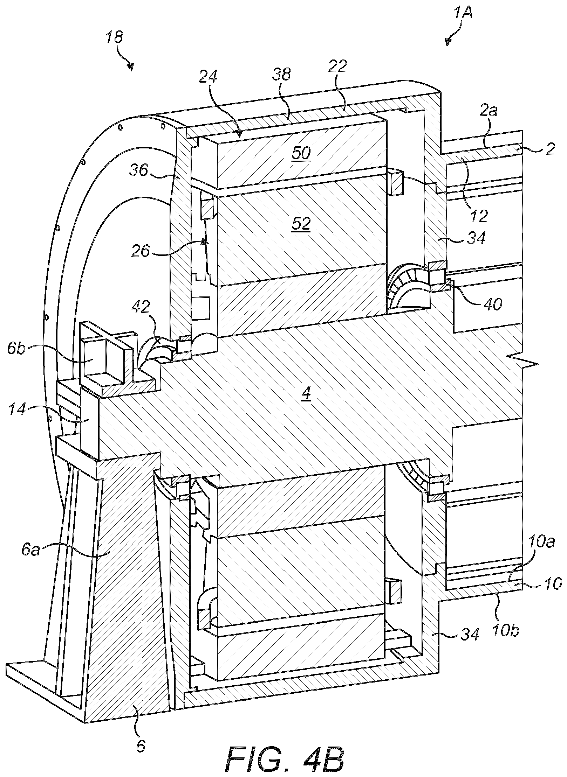

Referring to Figures 4A and 4B, in this alternative example the first and second drive units 18, 20 of the gearless conveyor drive 1A are configured as radial flux electric motors where magnetic flux flows through the respective rotor assembly in the radial direction - i.e., along a direction that is perpendicular to the axis of rotation of the barrel 2. Although only the first drive unit 18 is shown in Figures 4A and 4B, it will be readily understood that the second drive unit 20 that is positioned at the second axial end 14 of the barrel 2 has the same construction with a second rotor assembly and a second stator assembly surrounded by a second housing 28. The first rotor assembly 24 is shown to have a single rotor 50 and the first stator assembly 26 is shown to have a single stator 52 spaced apart from the rotor 50 by a radial air gap. The stator 52 is fixedly connected to the shaft 4, e.g., by means of a stator frame. The rotor 50 is fixedly connected to the first housing 22 - i.e., to the wall 38. The rotor 50 may include a plurality of permanent magnets and the stator 52 may include a plurality of stator coils, for example. But it will be understood that other arrangements are also possible.

One or more access openings (not shown) may be provided in the wall 36 (or end plate) - e.g., for maintenance and repair of the first rotor assembly 24 and/or the first stator assembly 26. Each access opening may be covered by a removable cover (not shown).

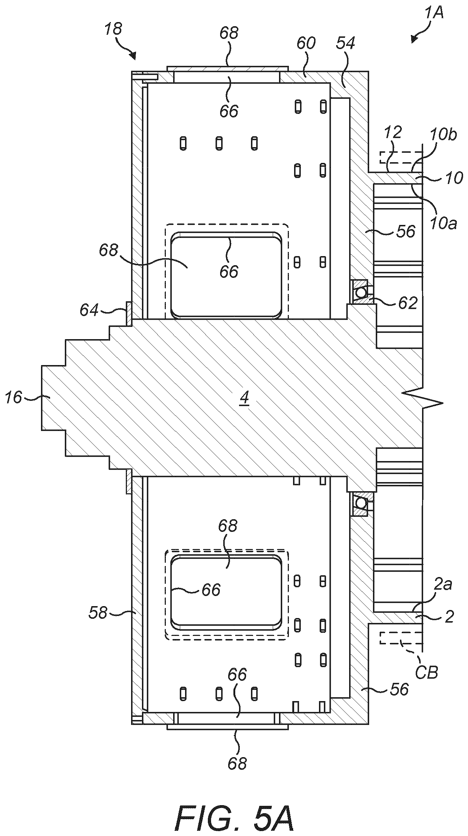

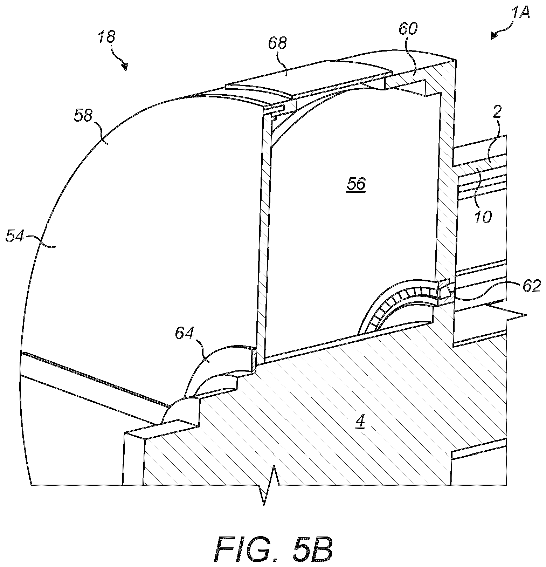

Figures 5A and 5B show an alternative first housing 54 for the first drive unit 18 of the gearless conveyor drive 1A. It will be readily understood that the second housing 28 of the second drive unit 20 may have the same construction. The first rotor and stator assemblies have been omitted from Figures 5A and 5B for clarity. The first housing 54 includes radially extending walls 56, 58 and a substantially cylindrical wall 60. The wall 56 is formed at the interface between the first drive unit 18 and the barrel 2. The wall 58 is formed as an end plate and is positioned at the first axial end of the gearless conveyor drive 1A. The wall 58 (or end plate) is removably connected to the barrel 2 by a plurality of mechanical fixings such as bolts or screws. A bearing 62 is positioned between the radially inner part of the wall 56 and the outer surface of the shaft 4. A sealing member 64 is positioned between the radially inner part of the wall 58 (or end plate) and the shaft 4. Figures 5A and 5B clearly show the access openings 66 that are provided in the substantially cylindrical wall 60 and are covered by removable covers 68.

It can be seen from Figure 1 that the outer diameter of the substantially cylindrical walls 38, 46 of the first and second housings 22, 28 is greater than the outer diameter of the barrel 2. This means that there is more space in the interior of the first and second housings 22, 28 for accommodating the respective rotor and stator assemblies. The respective rotor and stator assemblies may therefore be larger and have a higher power rating.

The edges of the conveyor belt CB are guided by the adjacent radially extending walls of the first and second drive units 18, 20.

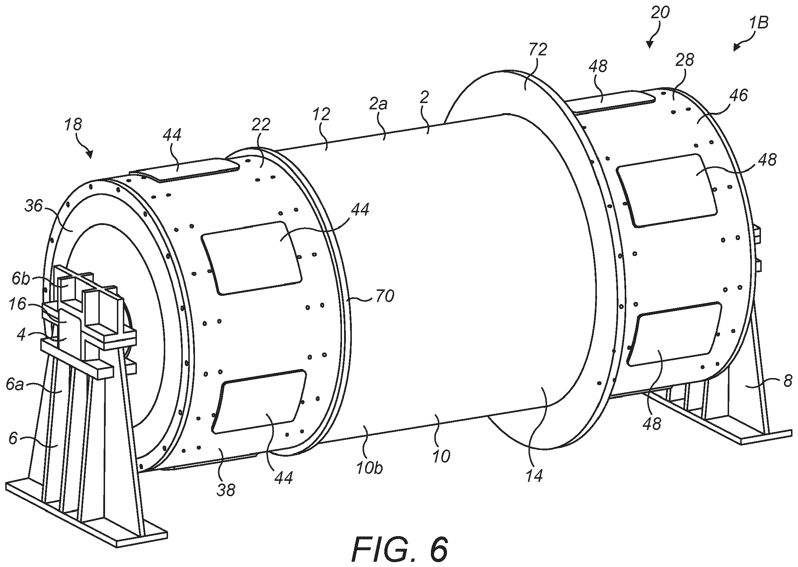

Referring to Figures 6 to 8, a second example of a gearless conveyor drive 1B is shown. The gearless conveyor drive 1B only differs from the gearless conveyor drive 1A described above in certain respects, and the same reference signs have been used for the same parts where appropriate.

The gearless conveyor drive 1B includes a substantially tubular barrel 2 having a radially outer surface 2a adapted to contact the conveyor belt CB. The gearless conveyor drive 1B also includes a stationary shaft 4 and a pair of support structures 6, 8, each support structure supporting a respective axial end of the shaft.

The barrel 2 comprise a rigid structural tube 10 that may be made of a suitable metal or metal alloy (e.g., steel, stainless steel or aluminium) and functions as the main structural part of the barrel. The radially inner surface 10a of the tube 10 is substantially cylindrical and may define the radially inner surface of the barrel 2. The radially outer surface 10b of the tube 10 is substantially cylindrical. The radially outer surface of the barrel 2 - i.e., the surface that contacts the conveyor belt - may be defined by the radially outer surface 10b of the tube 10 or by an outer layer (not shown) that is adhered to the radially outer surface of the tube. The outer layer may be made of a suitable material (e.g., rubber) and may be adhered to the radially outer surface 10b of the tube 10 by a suitable adhesive. The outer layer may protect the underlying tube 10 from wear and tear. The outer surface of the outer layer may be formed with a textured surface such as a diamond or square texture, for example, which may help to increase friction between the conveyor belt and the barrel and reduce slippage. If there is no need for a protective outer layer, this results in reduced material costs and assembly time.

The barrel 2 has a first axial end 12 and a second axial end 14.

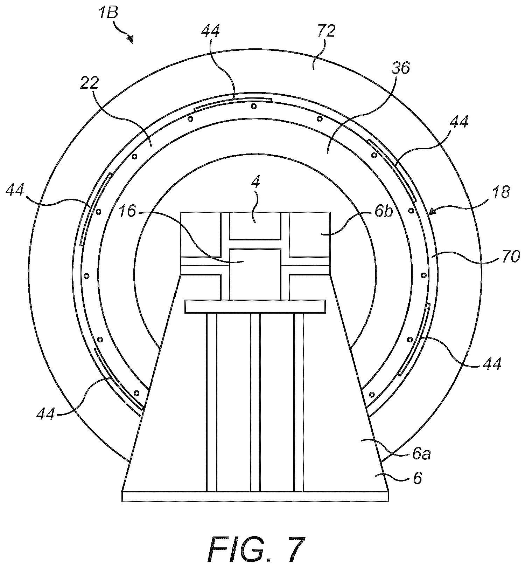

The shaft 4 extends through the barrel 2. The shaft 4 has a first axial end 16 that is supported by the support structure 6 and a second axial end that is supported by the support structure 8. The shaft 4 may include one or more openings (not shown) through which electrical cabling and cooling pipes may be fitted, for example. The axial ends of the shaft 4 have a non-circular (e.g., square) cross section and are received an opening in each support structure 6, 8 having a corresponding non-circular cross-section. This prevents rotation of the shaft 4 relative to the stationary support structures 6, 8. Each support structure 6, 8 may have a two-part construction with a lower part and an upper part that is removably connected to the lower part. The opening is defined by the lower and upper parts of each support structure 6, 8 as shown in Figure 7 (e.g., by a lower part 6a and an upper part 6b of the support structure 6). The upper part of each support structure may be removed from the corresponding lower part to allow the shaft 4 to be located.

A first drive unit 18 is positioned at the first axial end 12 of the barrel 2 and a second drive unit 20 is positioned at the second axial end 14 of the barrel 2.

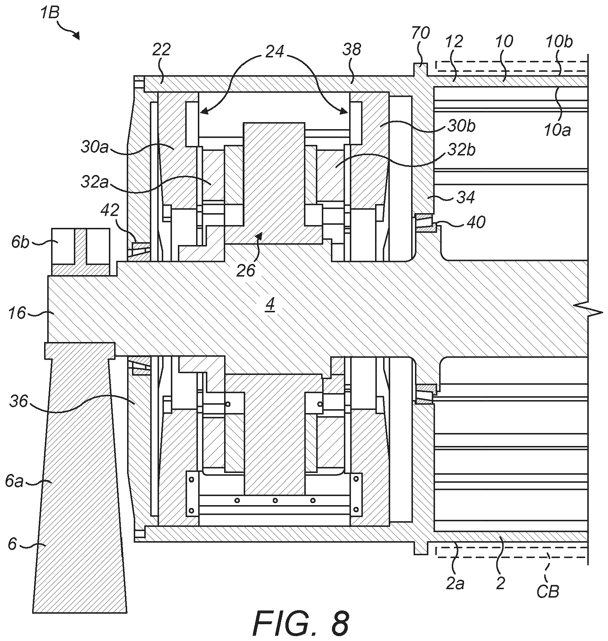

Referring to Figure 8, the first drive unit 18 includes a first housing 22 that surrounds a first rotor assembly 24 and a first stator assembly 26. In this example, the first and second drive units 18, 20 are configured as axial flux electric motors where magnetic flux flows through the respective rotor assembly in the axial direction - i.e., along a direction that is parallel to the axis of rotation of the barrel 2. Although only the first drive unit 18 is shown in Figure 8, it will be readily understood that the second drive unit 20 that is positioned at the second axial end 14 of the barrel 2 has the same construction with a second rotor assembly and a second stator assembly surrounded by a second housing 28. The first rotor assembly 24 is shown to have a first rotor 30a and a second rotor 30b. The first stator assembly 26 is shown to have a first stator 32 spaced apart from the first rotor 30a by a first axial air gap and a second stator 32b spaced apart from the second rotor 30b by a second axial air gap. The first and second rotors 30a, 30b are fixedly connected to the wall 38. The first and second stators 32a, 32b are fixedly connected to the shaft 4, e.g., by means of a stator frame. The first and second rotors 30a, 30b may each include a plurality of permanent magnets and the first and second stators 32a, 32b may include a plurality of stator coils, for example. But it will be understood that other arrangements are also possible.

The first and second housings 22, 28 are fixedly connected to the barrel 2 - i.e., so that the first and second housings rotate with the barrel relative to the shaft 4.

As shown in Figure 8, the first housing 22 includes a pair of radially extending walls 34, 36 that are spaced apart in the axial direction. The wall 34 is formed at the interface between the first drive unit 18 and the barrel 2. The wall 36 is formed as an end plate and is positioned at the first axial end of the gearless conveyor drive 1B adjacent the support structure 6. The wall 36 (or end plate) is removably connected to the barrel 2 by a plurality of mechanical fixings. A substantially cylindrical wall 38 extends between the radially extending walls 34, 36. A first bearing 40 is positioned between the radially inner part of the wall 34 and the outer surface of the shaft 4. A second bearing 42 is positioned between the radially inner part of the wall 36 (or end plate) and the shaft 4. If only a single bearing is used, the second bearing 42 is normally omitted and the radially inner part of the wall 36 may be in sliding contact with the shaft 4, optionally by using a sealing member.

Access openings are provided in the substantially cylindrical wall 38 to provide access to the interior of the first housing 22 - e.g., for maintenance and repair of the first rotor assembly 24 and/or the first stator assembly 26 - and are covered by removable covers 44. The access openings are circumferentially spaced around the wall 38. Access openings are also provided in the substantially cylindrical wall 46 of the second housing 28 - e.g., for maintenance and repair of the second rotor assembly and/or the second stator assembly - and are covered by removable covers 48. The access openings are circumferentially spaced around the wall 46.

It can be seen from Figure 6 that the outer diameter of the substantially cylindrical walls 38, 46 of the first and second housings 22, 28 is substantially the same as the outer diameter of the barrel 2. This means that there is less space in the interior of the first and second housings 22, 28 for accommodating the respective rotor and stator assemblies. But the overall design is more compact.

The gearless conveyor drive 1B includes a radially extending guide 70 adapted to guide an edge of the conveyor belt CB. The guide 70 is provided at the interface between the first drive unit 18 and the barrel 2. The gearless conveyor drive 1B includes a brake disc 72 that also functions as a guide for guiding the opposite edge of the conveyor belt CB. In other words, the conveyor belt CB is guided between a pair of guides 70, 72 that are spaced apart in the axial direction. The spacing is determined by the width of the conveyor belt CB.

The brake disc 72 may be used for emergency braking of the gearless conveyor drive 1B and/or to keep the barrel 2 and other rotating parts stationary during maintenance or repair, for example.

The brake disc 72 forms part of an external braking assembly (not shown) having any suitable construction. The braking assembly may also comprise one or more brake pads that may be brought into friction contact with the annular surface(s) of the brake disc 72 when braking of the rotor assembly is required. The one or more brake pads may be mounted on a brake calliper, for example. A suitable friction coating may be applied to one or both of the annular surfaces of the brake disc 72.

The brake disc 72 extends radially outwardly from the barrel 2.

The brake disc 72 may be formed as an integral part of the barrel 2, for example as part of the rigid structural tube 10. The brake disc 72 may alternatively be formed as an integral part of the second housing 28, for example. The brake disc 72 may be one of forged, welded and shrink-fitted to the barrel 2 or the second housing 28. Such a brake disc will not normally be easily replaced and so it may have an increased thickness to allow for surface regrinds of its annular surface(s) to prolong its use. The brake disc 72 may also be formed as a separate component that is fixedly connected to the barrel 2 or the second housing 28 by a plurality of mechanical fixings such as bolts or screws that allow the brake disc to be removed. Removing the one or more mechanical fixings using a suitable tool allows the brake disc 72 to be removed and replaced if necessary. Removing the brake disc 72 may make it easier to apply a new friction coating or easier to carry out a regrinding process, for example. The barrel 2 or the second housing 28 may comprise an integral radially extending flange and the brake disc 72 may be removably mounted to the barrel 2 or second housing 28 by the one or more mechanical fixings. The brake disc 72 may be segmented with each brake disc segment being fixedly connected to the barrel 2 or the second housing 28 and/or the adjacent brake disc segments by a plurality of mechanical fixings such as bolts or screws that allow each segment to be removed if required. Such segmented construction may facilitate removal of the brake disc 72. In some cases, it may also be necessary to remove only one or two of the individual brake disc segments in order to carry out the necessary repairs or replacement.

The brake disc 72 may be constructed as a "floating" brake disc. For example, the brake disc 72 may be formed as a separate component that fixedly connected to the barrel 2 or the second housing 28 by one or more mechanical fixings that allow for some limited relative movement between the brake disc 72 and the barrel 2 or the second housing 28. (This may be directly contrasted with conventional mechanical fixings such as bolts or screws where there is no relative movement at all between the brake disc and the barrel or the second housing.) The mechanical fixings for connecting the "floating" brake disc may be bobbins or rivets or rectangular keys, for example. The mechanical fixings may be received through aligned openings in the brake disc and a radially extending flange of the barrel or the second housing. The mechanical fixings for connecting the "floating" brake disc to the barrel or the second housing may be formed in two or more pieces because this normally allows for easier assembly and removal of the mechanical fixings and the brake disc. If the mechanical fixings are formed in two or more pieces (e.g., as a multi-piece bobbin or the like) the separate pieces may be fixedly connected together using one or more threaded fasteners or rivets, or by means of a push fit, screw fit or interference connection, for example. The mechanical fixings may comprise radial springs to provide dynamic concentricity control if required. More particularly, the radial springs may be used to adjust the relative movement that is permitted by the mechanical fixings. Using a "floating" brake disc may reduce heat dissipation into the barrel 2 and may prevent warping of the brake disc as a result of heat generated during braking. It would also allow the brake disc 72 to be removed. The "floating" brake disc may be formed in a plurality of segments, each segment being separately connected to the barrel 2 with one or more mechanical fixings. This may also allow for some limited relative movement between the individual segments of the "floating" brake disc. Cut-out portions or voids may be provided to reduce the contact area between the "floating" brake disc and the barrel or second housing. Such cut-out portions may be circumferentially spaced around the barrel 2 and may be positioned between the mechanical fixings, for example.

Although not shown, the brake disc 72 may comprise one or more locking holes adapted to receive a locking pin of an external locking mechanism. The locking pin may be moved in the axial direction between a locking position where it is engaged in an aligned locking hole and a non-locking position where it is not engaged and the barrel 2 is free to rotate. When the locking pin is engaged in a locking hole, the barrel 2 and the other rotating parts (e.g., the first and second housings 22, 28 and rotor assembly of each drive unit 18, 20) are prevented from rotating by the locking mechanism. This may be necessary when the gearless conveyor drive 1B is undergoing maintenance or repair, for example. The brake disc 72 may comprise a plurality of locking holes that may be circumferentially spaced around the brake disc. This may allow the barrel 2 and the other rotating parts to be locked in a particular angular position, e.g., so that an access opening of the first or second housing 22, 28 is in a particular position relative to the support structures 6, 8.

The brake disc 72 may be a vented brake disc and may include one or more vent holes or vent openings (not shown) that may be circumferentially spaced around the brake disc. Vent holes or vent openings may be arranged in any suitable pattern and may be interspersed with the optional locking holes.

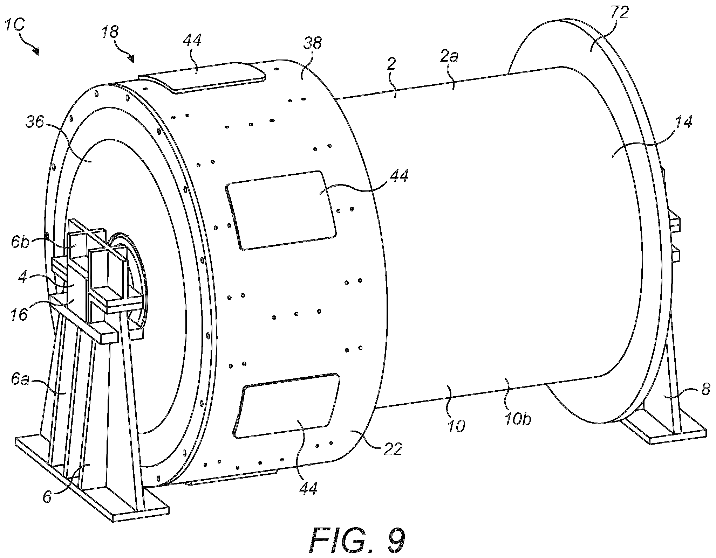

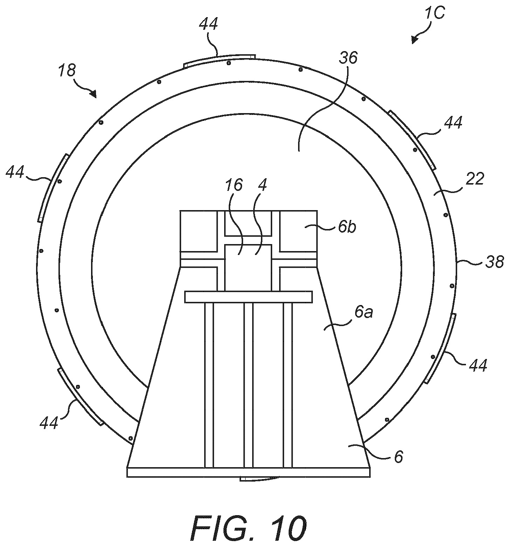

Referring to Figures 9 and 10, a third example of a gearless conveyor drive 1C is shown. The gearless conveyor drive 1C only differs from the gearless conveyor drives 1A and 1B described above in certain respects, and the same reference signs have been used for the same parts where appropriate.

The gearless conveyor drive 1C includes a substantially tubular barrel 2 having a radially outer surface 2a adapted to contact the conveyor belt CB. The gearless conveyor drive 1B also includes a stationary shaft 4 and a pair of support structures 6, 8, each support structure supporting a respective axial end of the shaft.

The barrel 2 comprise a rigid structural tube 10 that may be made of a suitable metal or metal alloy (e.g., steel, stainless steel or aluminium) and functions as the main structural part of the barrel. The radially inner surface of the tube 10 is substantially cylindrical and may define the radially inner surface of the barrel 2. The radially outer surface 10b of the tube 10 is substantially cylindrical. The radially outer surface of the barrel 2 - i.e., the surface that contacts the conveyor belt - may be defined by the radially outer surface 10b of the tube 10 or by an outer layer (not shown) that is adhered to the radially outer surface of the tube. The outer layer may be made of a suitable material (e.g., rubber) and may be adhered to the radially outer surface 10b of the tube 10 by a suitable adhesive. The outer layer may protect the underlying tube 10 from wear and tear. The outer surface of the outer layer may be formed with a textured surface such as a diamond or square texture, for example, which may help to increase friction between the conveyor belt and the barrel and reduce slippage. If there is no need for a protective outer layer, this results in reduced material costs and assembly time.

The barrel 2 has a first axial end 12 and a second axial end 14.

The shaft 4 extends through the barrel 2. The shaft 4 has a first axial end 16 that is supported by the support structure 6 and a second axial end that is supported by the support structure 8. The shaft 4 may include one or more openings (not shown) through which electrical cabling and cooling pipes may be fitted, for example. The axial ends of the shaft 4 have a non-circular (e.g., square) cross section and are received an opening in each support structure 6, 8 having a corresponding non-circular cross-section. This prevents rotation of the shaft 4 relative to the stationary support structures 6, 8. Each support structure 6, 8 may have a two-part construction with a lower part and an upper part that is removably connected to the lower part. The opening is defined by the lower and upper parts of each support structure 6, 8 as shown in Figure 10 (e.g., by a lower part 6a and an upper part 6b of the support structure 6). The upper part of each support structure may be removed from the corresponding lower part to allow the shaft 4 to be located.

A first drive unit 18 is positioned at the first axial end 12 of the barrel 2. There is no second drive unit 20 at the second axial end 14 of the barrel 2. Instead, the gearless conveyor drive 1C includes a brake disc 72 which may be as described above.

The first drive unit 18 is the same as the first drive unit 18 of the gearless conveyor drive 1A shown in Figures 1 to 3 and described above.

It can be seen from Figure 9 that the outer diameter of the substantially cylindrical wall 38 of the first housing 22 is greater than the outer diameter of the barrel 2. This means that there is more space in the interior of the first housing 22 for accommodating the respective rotor and stator assemblies. The first rotor and stator assemblies may therefore be larger and have a higher power rating.

The edges of the conveyor belt CB are guided by the adjacent radially extending wall of the first drive unit 18 and the brake disc 72.

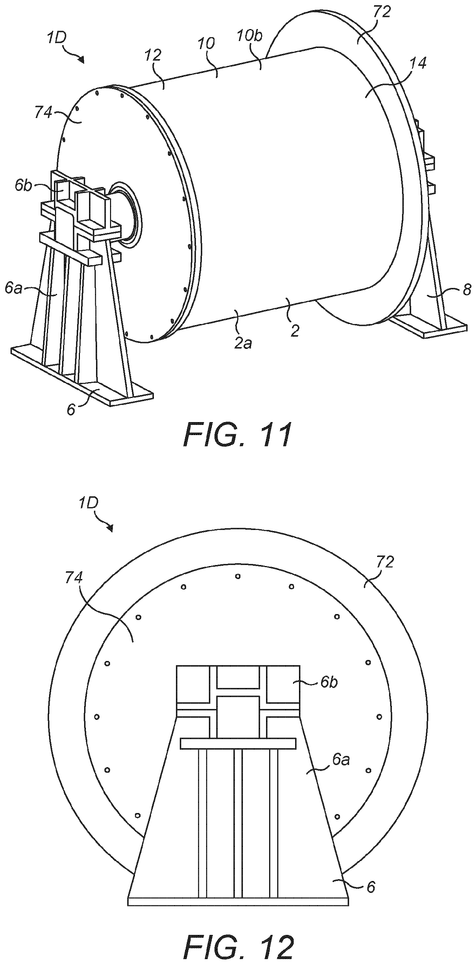

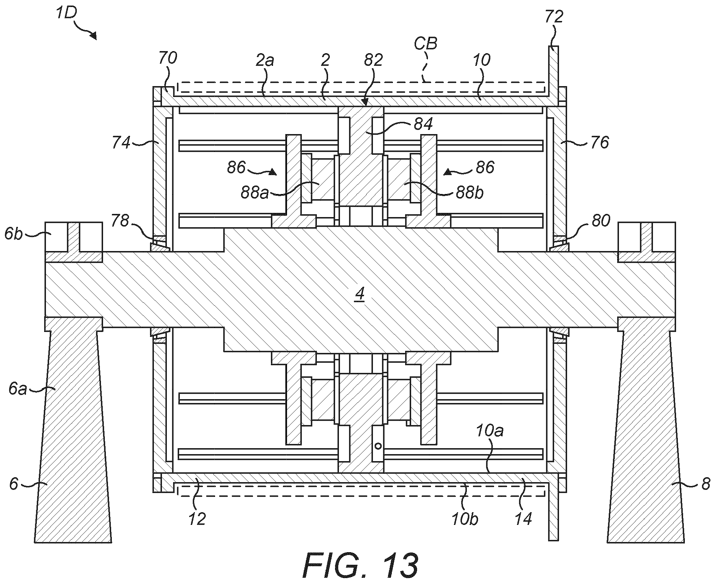

Referring to Figures 11 to 13, a fourth example of a gearless conveyor drive 1D is shown. The gearless conveyor drive 1D only differs from the gearless conveyor drives 1A, 1B and 1C described above in certain respects, and the same reference signs have been used for the same parts where appropriate.

The gearless conveyor drive 1D includes a substantially tubular barrel 2 having a radially outer surface 2a adapted to contact the conveyor belt CB. The gearless conveyor drive 1D also includes a stationary shaft 4 and a pair of support structures 6, 8, each support structure supporting a respective axial end of the shaft.

The barrel 2 comprise a rigid structural tube 10 that may be made of a suitable metal or metal alloy (e.g., steel, stainless steel or aluminium) and functions as the main structural part of the barrel. The radially inner surface 10a of the tube 10 is substantially cylindrical and may define the radially inner surface of the barrel 2. The radially outer surface 10b of the tube 10 is substantially cylindrical. The radially outer surface of the barrel 2 - i.e., the surface that contacts the conveyor belt - may be defined by the radially outer surface 10b of the tube 10 or by an outer layer (not shown) that is adhered to the radially outer surface of the tube. The outer layer may be made of a suitable material (e.g., rubber) and may be adhered to the radially outer surface 10b of the tube 10 by a suitable adhesive. The outer layer may protect the underlying tube 10 from wear and tear. The outer surface of the outer layer may be formed with a textured surface such as a diamond or square texture, for example, which may help to increase friction between the conveyor belt and the barrel and reduce slippage. If there is no need for a protective outer layer, this results in reduced material costs and assembly time.

The barrel 2 has a first axial end 12 and a second axial end 14.

The shaft 4 extends through the barrel 2. The shaft 4 has a first axial end 16 that is supported by the support structure 6 and a second axial end that is supported by the support structure 8. The shaft 4 may include one or more openings (not shown) through which electrical cabling and cooling pipes may be fitted, for example. The axial ends of the shaft 4 have a non-circular (e.g., square) cross section and are received an opening in each support structure 6, 8 having a corresponding non-circular cross-section. This prevents rotation of the shaft 4 relative to the stationary support structures 6, 8. Each support structure 6, 8 may have a two-part construction with a lower part and an upper part that is removably connected to the lower part. The opening is defined by the lower and upper parts of each support structure 6, 8 as shown in Figure 12 (e.g., by a lower part 6a and an upper part 6b of the support structure 6). The upper part of each support structure may be removed from the corresponding lower part to allow the shaft 4 to be located.

A first radially extending wall 74 (or first end plate) is removably connected to the barrel 2 at the first axial end 12 by a plurality of mechanical fixings such as bolts or screws. A second radially extending wall 76 (or second end plate) is removably connected to the barrel 2 at the second axial end 14 by a plurality of mechanical fixings such as bolts or screws. A first bearing 78 is positioned between the radially inner part of the wall 74 and the outer surface of the shaft 4. A second bearing 80 is positioned between the radially inner part of the wall 76 (or end plate) and the shaft 4.

A drive unit is positioned within the interior of the barrel 2. The drive unit is configured as an axial flux electric motor where magnetic flux flows through the respective rotor assembly in the axial direction - i.e., along a direction that is parallel to the axis of rotation of the barrel 2. The drive unit includes a rotor assembly 82 with a single rotor 84. The drive unit includes a stator assembly 86 with a first stator 88a that is spaced apart from the rotor 86 by a first axial air gap, and a second stator 88b that is spaced apart from the rotor 86 by a second axial air gap. The rotor 86 is fixedly connected to the barrel 2. Each stator 88a, 88b is fixedly connected to the shaft 4, e.g., by means of a stator frame. The rotor 84 may include a plurality of permanent magnets and each stator 88a, 88b may include a plurality of stator coils, for example. But it will be understood that other arrangements are also possible.

This provides a compact design where the space inside the barrel 2 is fully utilised. In this arrangement, the rotor 84 is connected directly to the barrel 2, but it will be understood that each rotor may be connected indirectly to the barrel, e.g., by a rigid structural part of the drive unit.

The gearless conveyor drive 1D includes a radially extending guide 70 adapted to guide an edge of the conveyor belt CB. The gearless conveyor drive 1D includes a brake disc 72 that also functions as a guide for guiding the opposite edge of the conveyor belt CB. In other words, the conveyor belt CB is guided between a pair of guides 70, 72 that are spaced apart in the axial direction. The spacing is determined by the width of the conveyor belt CB. The brake disc 72 may be as described above.

Each stator of the gearless conveyor drives 1A, 1B, ..., 1D described above, may have any suitable construction. For example, each stator may comprise a stator winding (e.g., a multi-phase stator winding) with a plurality of stator coils. Each stator winding may be electrically connected to a converter assembly.

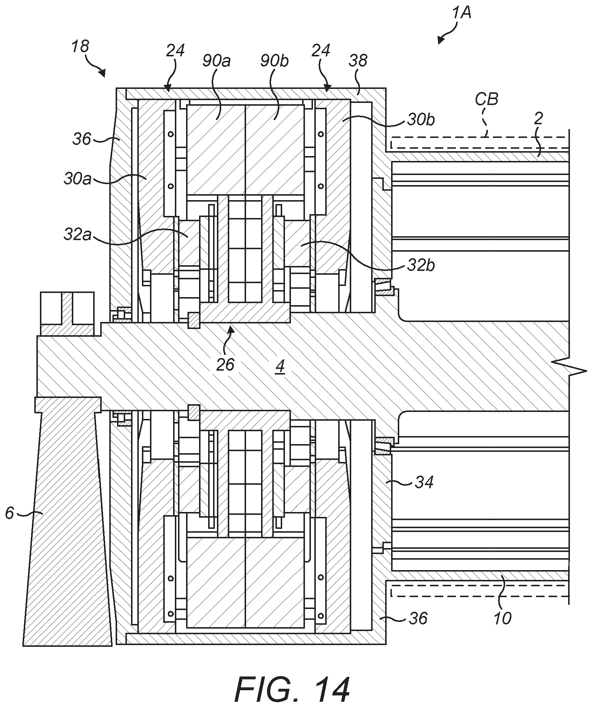

Figure 14 shows an alternative first drive unit 18 for the gearless conveyor drive 1A where the first rotor assembly 24 includes a first rotor 30a and a second rotor 30b that are fixedly connected to the substantially cylindrical wall 38. The first stator assembly 26 includes a first stator 32a that is spaced apart from the first rotor 30a by a first axial gap, and a second stator 32b that is spaced apart from the second rotor 30b by a second axial gap. The stator winding of the first stator 32a is electrically connected to a first converter assembly 90a and the stator winding of the second stator 32b is electrically connected to a second converter assembly 90b.

The first and second converter assemblies 90a, 90b are positioned radially outside the first stator assembly 26 as shown.

The second drive unit 20 of the gearless conveyor drive 1A will have the same construction.

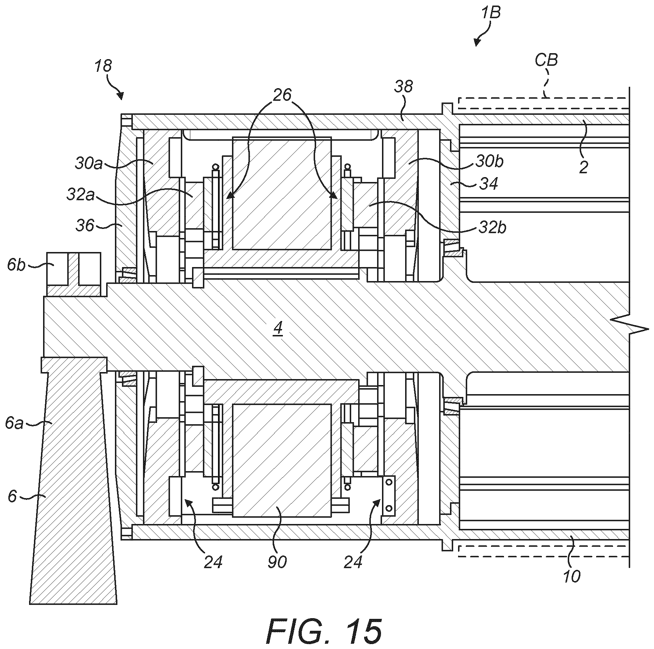

Figure 15 shows an alternative first drive unit 18 for the gearless conveyor drive 1B where the first rotor assembly 24 includes a first rotor 30a and a second rotor 30b that are fixedly connected to the substantially cylindrical wall 38. The first stator assembly 26 includes a first stator 32a that is spaced apart from the first rotor 30a by a first axial gap, and a second stator 32b that is spaced apart from the second rotor 30b by a second axial gap. The stator windings of the first and second stators 32a, 32b are electrically connected to a converter assembly 90.

The converter assembly 90 is positioned axially between the first and second stators 32a, 32b as shown.

The second drive unit 20 of the gearless conveyor drive 1B will have the same alternative construction.

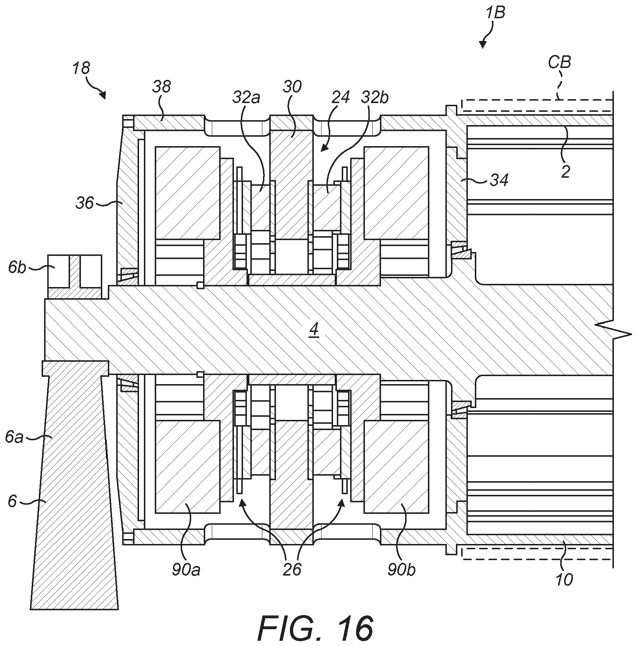

Figure 16 shows an alternative first drive unit 18 for the gearless conveyor drive 1B where the first rotor assembly 24 includes a rotor 30 that is fixedly connected to the substantially cylindrical wall 38. The first stator assembly 26 includes a first stator 32a that is spaced apart from the rotor 30 by a first axial gap, and a second stator 32b that is spaced apart from the rotor 30 by a second axial gap. The stator winding of the first stator 32a is electrically connected to a first converter assembly 90a and the stator winding of the second stator 32b is electrically connected to a second stator assembly 90b.

The converter assemblies 90a, 90b are positioned axially outside the first and second stators 32a, 32b as shown.

The second drive unit 20 of the gearless conveyor drive 1B will have the same alternative construction.

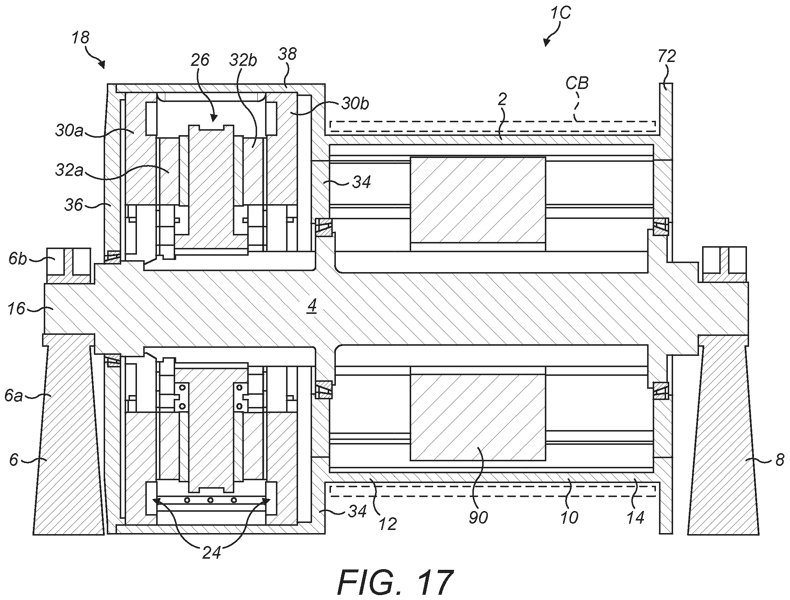

Figure 17 shows an alternative first drive unit 18 for the gearless conveyor drive 1C where the rotor assembly 24 includes a first rotor 30a and a second rotor 30b that are fixedly connected to the substantially cylindrical wall 38. The first stator assembly 26 includes a first stator 32a that is spaced apart from the first rotor 30a by a first axial gap, and a second stator 32b that is spaced apart from the second rotor 30b by a second axial gap. The stator windings of the first and second stators 32a, 32b are electrically connected to a converter assembly 90.

The converter assembly 90 is positioned in the interior of the barrel 2 as shown.

In the gearless conveyor drives 1A, 1B, and 1C described above, the drive units 18, 20 may be removably connected to the barrel 2. Each rotor of the respective rotor assembly may remain fixedly connected to the housing of the drive unit 18, 20 and may be removed with it. Each stator of the respective stator assembly may remain fixedly connected to the shaft 4.

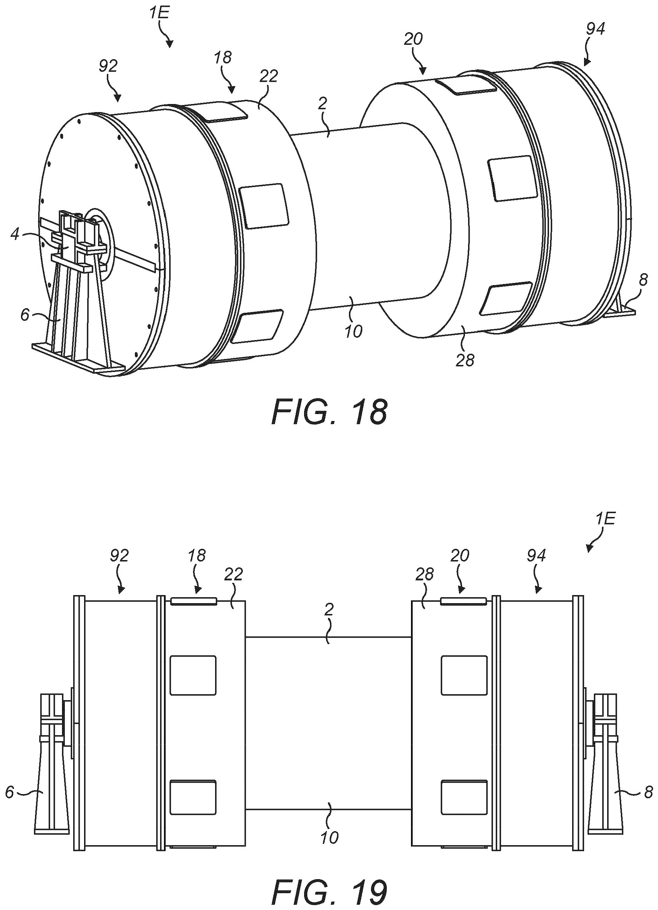

Referring to Figures 18 to 22, a fifth example of a gearless conveyor drive 1E includes a first drive unit 18 and a second drive unit 20 that have a similar construction to the corresponding drive units of the gearless conveyor drive 1A shown in Figures 1 to 3, for example. The gearless conveyor drive 1E also includes a third drive unit 92 and a fourth drive unit 94. The third and fourth drive units 92, 94 are formed as self-contained units or "modules" that are fitted to the axial ends of the shaft 4.

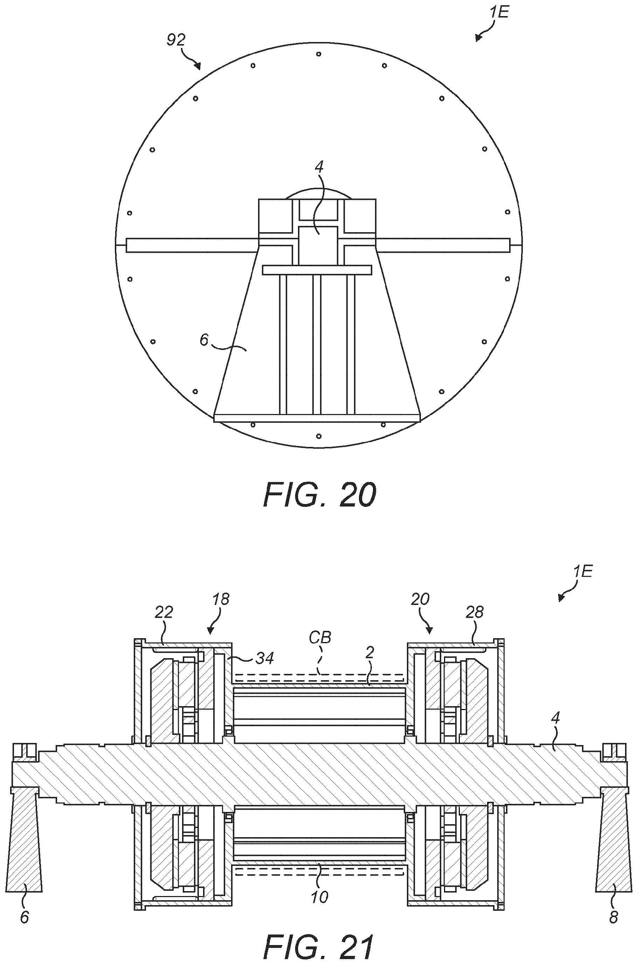

Figure 21 shows the gearless conveyor drive 1E with only the first and second drive units 18, 20 fitted to the shaft 4. It can be seen that the shaft 4 is deliberately designed so that it may accommodate the third and fourth drive units 92, 94 if they are required.

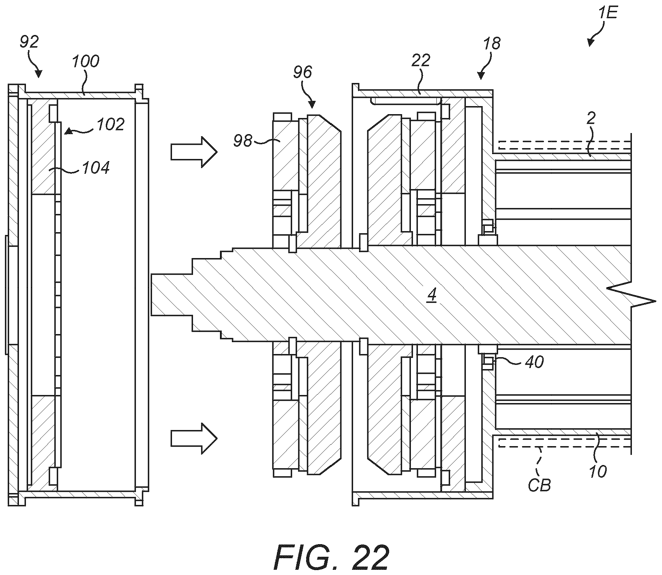

Figure 22 shows how the radially extending wall 36 (or end plate) of the first drive unit 18 may be removed from the first drive unit. A stator assembly 96 of the third drive unit 92 is fitted to the shaft 4 - i.e., the stator 98 is fixedly connected to the shaft by a stator frame. The rest of the third drive unit 92 - i.e. the housing 100 and the rotor assembly 102 that includes a rotor 104 - is then fitted over the axial end of the shaft 4 and fixedly connected to the first drive unit 18. In particular, the housing 100 of the third drive unit 92 is removably connected to the first housing 22 of the first drive unit 18 by a plurality of mechanical fixings such as bolts or screws. The fourth drive unit 94 may be fitted and fixedly connected to the second drive unit 20 in the same way.

The housings 22, 100 of the first and third drive units 18, 92 are mounted for rotation by a bearing 40 of the first drive unit 18. The housings of the second and fourth drive units 20, 94 are mounted for rotation by a single bearing of the second drive unit 20.

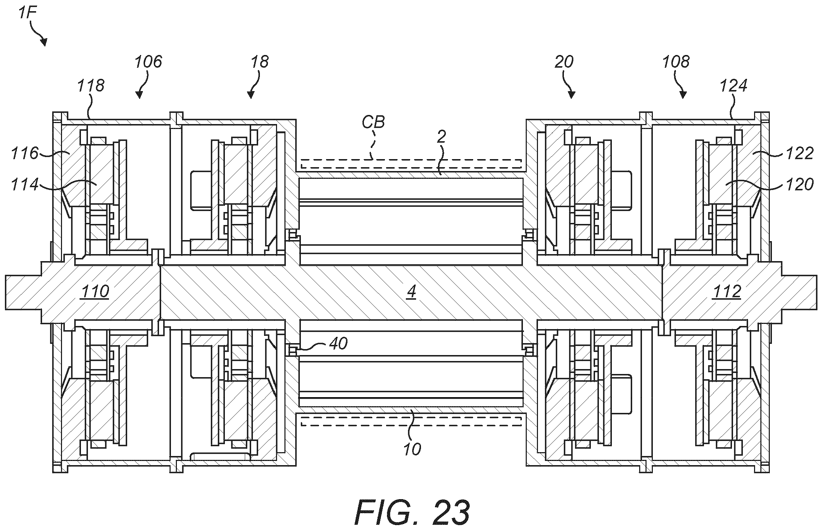

Referring to Figure 23, a sixth example of a gearless conveyor drive 1F includes a first drive unit 18 and a second drive unit 20 that have a similar construction to the corresponding drive units of the gearless conveyor drive 1A shown in Figures 1 to 3, for example. The gearless conveyor drive 1F also includes a third drive unit 106 and a fourth drive unit 108. The third and fourth drive units 106, 108 are formed as self-contained units or "modules" and include their own sub-shaft 110, 112. The sub-shafts 110, 112 are fixedly connected to the respective axial ends of the shaft 4 using a plurality of mechanical fixings such as bolts or screws. The third drive unit 106 includes a stator 114 that is fixedly connected to the sub-shaft 110 and a rotor 116 that is fixedly connected to a housing 118 of the third drive unit. The fourth drive unit 108 includes a stator 120 that is fixedly connected to the sub-shaft 112 and a rotor 122 that is fixedly connected to a housing 124 of the fourth drive unit.

To fit the third drive unit 106, the sub-shaft 110 is fixedly connected to the axial end of the shaft 4 and the housing 118 is fixedly connected to the first housing 22 of the first drive unit 18.

To fit the fourth drive unit 106, the sub-shaft 112 is fixedly connected to the other axial end of the shaft 4 and the housing 124 is fixedly connected to the housing 28 of the second drive unit 20.

The housings 22, 118 of the first and third drive units 18, 106 are mounted for rotation by a bearing 40 of the first drive unit 18. The housings of the second and fourth drive units 20, 108 are also mounted for rotation by a single bearing of the second drive unit 20.

## Claims

1. A gearless conveyor drive (1A; 1B; ...; 1F) for driving a conveyor belt (CB) of a conveyor system, the gearless conveyor drive (1A; 1B; ...; 1F) comprising:
a substantially tubular barrel (2) having a radially outer surface (2a) adapted to contact the conveyor belt (CB);
a stationary shaft (4);
a pair of support structures (6, 8), each support structure (6, 8) supporting a respective axial end of the shaft (4); and
a first drive unit (18) comprising a first rotor assembly (24) and a first stator assembly (26);
wherein the first rotor assembly (24) comprises at least one first rotor (30; 30a, 30b) fixedly connected to the barrel (2) for rotating the barrel (2) relative to the shaft (4), and wherein the first stator assembly (26) comprises at least one first stator (32; 32a, 32b) fixedly connected to the shaft (4).

2. A gearless conveyor drive (1A; 1B; ...; 1F) according to claim 1, wherein the first drive unit (18) is configured as an axial flux electric motor.

3. A gearless conveyor drive (1A; 1B; 1D; 1E; 1F) according to claim 1 or claim 2, wherein the first drive unit (18) is positioned at a first axial end (12) of the barrel (2) and comprises a housing (22) that surrounds the first rotor assembly (24) and the first stator assembly (26) and is fixedly connected to the barrel (2).

4. A gearless conveyor drive (1A; 1B; 1D; 1E; 1F) according to claim 3, wherein the at least one first rotor (30; 30a, 30b) is fixedly connected to the barrel (2) by the housing (22), and wherein the housing (22) is adapted to rotatably mount the barrel (2) and the at least one first rotor (30; 30a, 30b) to the shaft (4).

5. A gearless conveyor drive (1A; 1B; 1D; 1E; 1F) according to claim 4, wherein the housing (22) includes at least one radially extending wall (34, 36) that is adapted to rotatably mount the barrel (2) to the shaft (4) by a bearing (40, 42).

6. A gearless conveyor drive (1A; 1B; 1D; 1E; 1F) according to claim 5, wherein the housing (22) includes a substantially cylindrical wall (38) that extends from the at least one radially extending wall (34, 36).

7. A gearless conveyor drive (1A; 1B; 1D; 1E; 1F) according to claim 6, wherein the outer diameter of the substantially cylindrical wall (38) is substantially the same as the outer diameter of the barrel (2).

8. A gearless conveyor drive (1B) according to claim 7, further comprising at least one radially extending guide (70) adapted to guide an edge of the conveyor belt (CB).

9. A gearless conveyor drive (1A; 1C; 1E; 1F) according to claim 6, wherein the outer diameter of the substantially cylindrical wall (38) is greater than the outer diameter of the barrel (2).

10. A gearless conveyor drive (1A; 1B; ...; 1F) according to any preceding claim, wherein the first drive unit (18) is removably connected to the barrel (2), and wherein the at least one first rotor (30; 30a, 30b) is removably connected to the barrel (2) and the at least one first stator (32; 32a, 32b) is removably connected to the shaft (4).

11. A gearless conveyor drive (1A; 1B; 1E; 1F) according to any preceding claim, further comprising a second drive unit (20) positioned at a second axial end (14) of the barrel (2) and comprising a second rotor assembly and a second stator assembly, wherein the second rotor assembly comprises at least one second rotor fixedly connected to the barrel for rotating the barrel relative to the shaft, and wherein the second stator assembly comprises at least one second stator fixedly connected to the shaft.

12. A gearless conveyor drive (1A; 1B; 1E; 1F) according to claim 11, wherein the second drive unit (20) comprises a housing (28) that surrounds the second rotor assembly and the second stator assembly, wherein the at least one second rotor is fixedly connected to the barrel by the housing (28), and wherein the housing (28) is adapted to rotatably mount the barrel (2) and the at least one second rotor to the shaft (4).

13. A gearless conveyor drive (1E; 1F) according to any preceding claim, further comprising a third drive unit (92; 106) fixedly connected to the first drive unit (18) and comprising a third rotor assembly (102) and a third stator assembly (96), wherein the third rotor assembly (102) comprises at least one third rotor (104; 116) fixedly connected to the barrel (2) for rotating the barrel (2) relative to the shaft (4), and wherein the third stator assembly (96) comprises at least one third stator (98; 114).

14. A gearless conveyor drive (1E; 1F) according to claim 13, wherein the at least one third stator (98; 114) is fixedly connected to the shaft (4) or is fixedly connected to a sub-shaft (112) that is fixedly connected to the shaft (4).

15. A gearless conveyor drive (1E; 1F) according to claim 13 or claim 14, wherein the first rotor assembly (18) and the third rotor assembly (92; 106) are rotatably mounted to the shaft by a single bearing (40).
